# EUROPEAN PATENT APPLICATION

(11) **EP 1 696 089 A1**
(43) Date of publication of application: **30.08.2006**
(21) Application number: 04792585.4
(22) Date of filing: 19.10.2004
(51) Int. Cl.: E05B 1/00, E05B 49/00, B60R 25/00

(54) **DOOR OPENING AND CLOSING DEVICE**

(30) Priority: 20.10.2003 JP 2003359519
(71) Applicant: ALPHA CORPORATION, Yokohama-shi, Kanagawa 236-0004 (JP)
(72) Inventor: MIZUSHIMA, Kenji, c/o Alpha Corp., Kanagawa, 236-0023 (JP); MINEMURA, Ryuji, c/o Alpha Corp., Kanagawa 236-0023 (JP)
(74) Representative: Grünecker, Kinkeldey, Stockmair & Schwanhäusser Anwaltssozietät
(86) International application number: PCT/JP2004/015416
(87) International publication number: WO 2005/038172

(57) **Abstract**

A door opener-closer includes a door handle. The door opener-closer includes a magnetic body core made of a soft magnetic body, is received in the door handle, and includes a plastic antenna serving as transmitter-receiver communicating with a portable device. The door opener-closer includes a handle body having a backface side formed with a cover receiver. The door opener-closer includes a cover handle united with the antenna and made of a plastic resin. The cover handle mates with the cover receiver in such a manner as to be held by the cover receiver. A sensor senses at least one of the followings which are implemented by an operator carrying the portable device: approaching a door, contacting the door, and operating the door. The transmitter-receiver and the portable device communicate with each other, thus locking or unlocking the door.

## Description

### TECHNICAL FIELD

The present invention relates to a door opener-closer for opening or closing a door.

### BACKGROUND ART

For example, Japanese Patent Unexamined Publication No. 2003-166369 discloses a door opener-closer used for a keyless entry system of an automobile. The above the door opener-closer is disposed in a door handle for opening or closing a vehicular door, and includes, an antenna for causing a magnetic component to an outer part by oscillation. The door opener-closer is disposed in the door handle, and includes a sensor electrode featuring static capacity which is varied by an approach of a human body to the door handle. There is provided a second antenna including a coil and an oscillation capacity. The sensor electrode includes the second antenna. For disposing in the door handle an oscillation circuit for transmitting a request signal and a sensor oscillation circuit for sensing the approach of the human body based on the static capacity, the door'opener-closer works for saving space.

### DISCLOSURE OF THE INVENTION

The above door opener-closer, however, fails to disclose how each of the structural elements is received in the door handle, thereby making it difficult to achieve the door opener-closer.

It is therefore an object of the present invention to provide a door opener-closer having a door handle incorporating therein an antenna, no need of increasing the number of components of the door handle.

According to a first aspect of the present invention, there is provided a door opener-closer, comprising: a door handle; a flexible antenna including a magnetic body core made of a soft magnetic body, received in the door handle and serving as a transmitter-receiver communicating with a portable device; a handle body having a backface side formed with a cover receiver; a cover handle united with the antenna and made of a plastic resin, the cover handle mating with the cover receiver in such a manner as to be held by the cover receiver; and a sensor for sensing at least one of the followings which are implemented by an operator carrying the portable device: approaching a door, contacting the door, and operating the door, to thereby allow the transmitter-receiver and the portable device to communicate with each other, thus locking or unlocking the door.

The cover handle has a first end side and a second end side respectively provided with a first engagement protrusion and a second engagement protrusion, the cover receiver has a first end side and a second end side respectively provided with a first engagement and a second engagement, and the first engagement protrusion and the second engagement protrusion are respectively engageable with the first engagement and the second engagement.

The sensor is united with the antenna.

The door handle is applied to an outside door handle device for a vehicle.

According to a second aspect of the present invention, there is provided a door handle, comprising: a grip for operating a door; a plastic antenna communicating with a portable device for operating a lock gear of the door; and an engagement gear for engaging the grip with the plastic antenna.

The antenna includes: a flexible base for covering the grip, and a plastic magnetic body united with the flexible base.

The antenna includes a protrusion extending from the flexible base, and the grip includes a nail extending toward the door and engaged with the protrusion.

According to a third aspect of the present invention, there is provided a keyless entry system, comprising: a door handle for operating a door; a lock gear for locking the door; and a controller for operating the lock gear, the controller including: a portable device, a plastic antenna communicating with the portable device, and an engagement gear for engaging the antenna with the door handle.

Under the present invention, the flexible cover handle bent in combination with the antenna is received in the cover receiver. With this, the antenna can be disposed in the door handle no need of increasing the number of components of the door handle.

With the cover handle bent in combination with the antenna, the engagement protrusions are engaged with the respective engagements, thereby mating the cover handle with the cover receiver, thus holding the cover handle. Thereby, with a simple structure, the antenna can be disposed in the door handle, no need of increasing the number of components.

With the sensor united with the antenna, the sensor in combination with the antenna is assembled to the door handle. In the door, thereby, wiring of the sensor or connecting the structure the sensor is not necessary, improving assemblability.

### BRIEF DESCRIPTION OF THE DRAWINGS

Fig. 1 is a block diagram of a keyless entry system, according to a first embodiment.

Fig. 2 is a front view of a door opener-closer in Fig. 1.

Fig. 3 is a cross sectional view taken along the lines III-III in Fig. 2.

Fig. 4 is a sideward cross sectional view of a door handle in a process of assembly.

Fig. 5 is a front view of the door opener-closer, according to a second embodiment.

Fig. 6 is a cross sectional view taken along the lines VI-VI in Fig. 5.

### BEST MODE FOR CARRYING OUT THE INVENTION

A door opener-closer 1 is to be hereinafter explained in detail referring to the enclosed drawings, according to a first embodiment of the present invention.

The door opener-closer 1 is applied to an outside door handle device for a vehicle, which device is included in a keyless entry system 100.

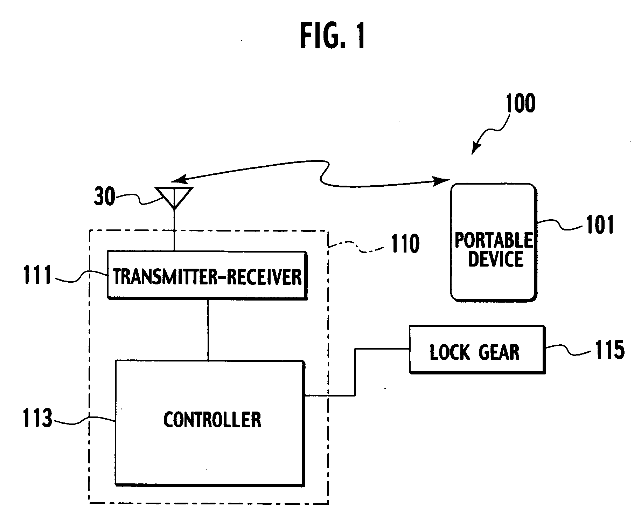

Referring to Fig. 1, the keyless entry system 100 includes a portable device 101 carried by an operator. The keyless entry system 100 includes a body 110 disposed in a door 70 or in the vicinity of the door 70. The body 110 includes an antenna 30, a transmitter-receiver 111, a controller 113, and a lock gear 115. The transmitter-receiver 111 of the body 110 communicates with the portable device 101 via the antenna 30. According to a result of the communication of the transmitter-receiver 111 with the portable device 101, the controller 113 locks or unlocks the lock gear 115, to thereby open or close the door 70.

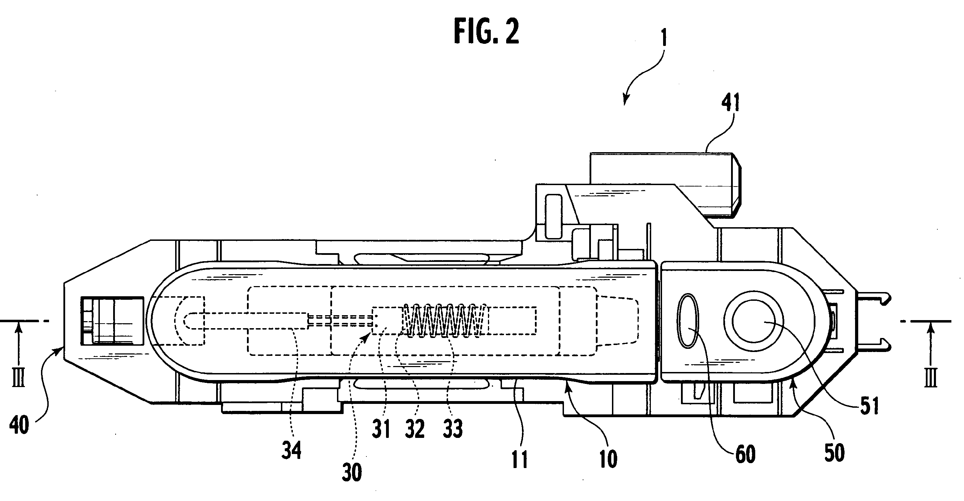

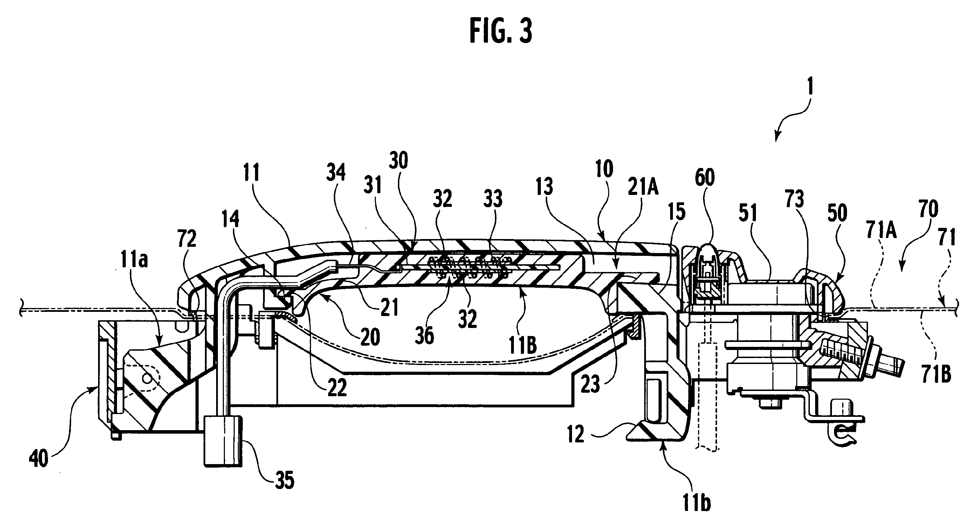

Referring to Fig. 2 and Fig. 3, the door opener-closer 1 includes a base member 40 fixed to a backface side 71B of a door panel 71 of the vehicle. The door opener-closer 1 includes a door handle 10 assembled from a surface side 71A of the door panel 71 to the base member 40 through a first mounting hole 72 and a second mounting hole 73 which are defmed in the door panel 71. The door handle 10 opens or closes the door 70. The door opener-closer 1 includes an escutcheon 50 in the vicinity of the door handle 10. The escutcheon 50 is assembled from the surface side 71 A of the door panel 71 to the base member 40 through the second mounting hole 73.

The door handle 10 includes a handle body 11 (in a form of a grip handle) and a cover handle 20. The cover handle 20 is united with the antenna 30. A first end side 11a of the handle body 11 is supported to the base member 40. A second end side 11b of the handle body 11 is provided with a coupler 12, coupling the second end side 11B with the lock gear 115 (Refer to Fig. 1) of the door 70.

Operating the door handle 10 rotates the second end side 11b around the first end side 11a. With this, the lock gear 115 is operated and a door lock (not shown) is unlocked, to thereby open or close the door 70.

The cover handle 20 includes the cover body 21 and the antenna 30. For molding the cover handle 20 by using flexible resin, the antenna 30 is united with a surface side 21 A of the cover body 21. The cover handle 20 is incorporated in a cover receiver 13 which is disposed on a backface side 11B of the handle body 11.

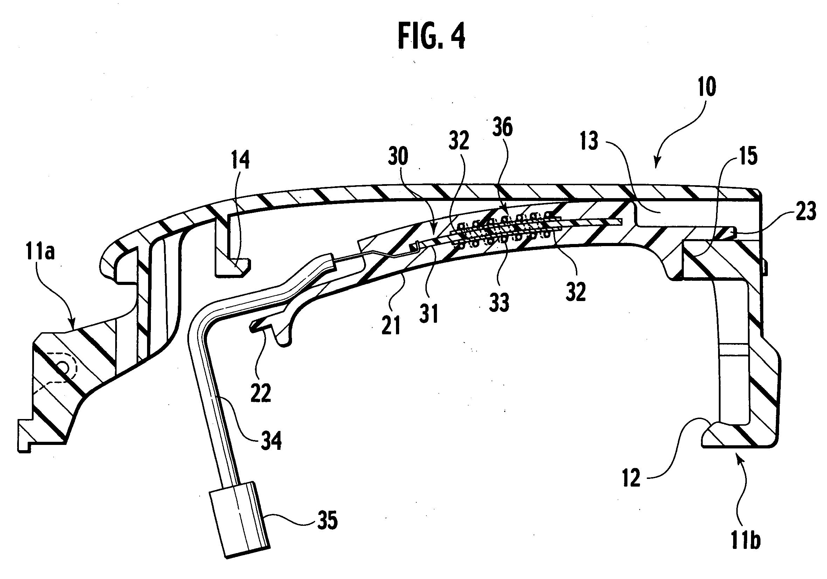

The cover body 21 has a first end side and a second end side which are respectively provided with a first engagement protrusion 22 and a second engagement protrusion 23. The first end side 11 a and the second end side 11b of the handle body 11 are respectively provided with a first engagement 14 and a second engagement 15 each serving as a nail. In Fig. 4, inserting the first engagement protrusion 22 and the second engagement protrusion 23 in the cover receiver 13 by bending the cover handle 20 in combination with the antenna 30 can recover the cover handle 20 into an original form thereof. With this, the first engagement protrusion 22 is engaged with the first engagement 14, while the second engagement protrusion 23 is engaged with the second engagement 15. The above engagements can mate the cover handle 20 with the handle body 11 free of backlash, thereby holding the cover handle 20.

The antenna 30 includes a core part 32 which is made of magnetic body cores layered on a surface and a backface of a flexible print wire board 31, where the magnetic body cores are made of soft magnetic body shaped into a plate. The antenna 30 includes an insulative cover lead 33 wound to the core part 32. An outer connector cable 34 extends from a first end of the antenna 30. The outer connector cable 34 has a head end part provided with a connector 35. The connector 35 connects to the controller 113 (Refer to Fig. 1) on the vehicle's body side. An entirety of the antenna 30 sealed with flexible resin such as elastomer and the like is united, featuring flexibility.

With the door handle 10 assembled to the base member 40, the coupler 12 is coupled with a bell crank 41 disposed at the base member 40, thereby biasing the second end side 11b of the door handle 10 toward the base member 40. With the above structure, the door panel 71 receiving a great impact such as collision can prevent the door 70 from being opened, which opening may be caused by unlocking the door lock due to malfunction and the like of the door handle 10.

The escutcheon 50 is disposed in the vicinity of the second end side 11b of the door handle 10 in such a manner as to face the second end side 11b of the door handle 10. The escutcheon 50 is connected from the surface side 71 A of the door panel 71 to the base member 40 through the second mounting hole 73 defined in the door panel 71.

The escutcheon 50 has a cylinder key 51 serving as an auxiliary lock. The cylinder key 51 is operable by means of an auxiliary key (not shown) carried by the operator. The escutcheon 50 has a lock switch 60 serving as a sensor. Operating the cylinder key 51 can lock or unlock the lock gear 115. Operating the lock switch 60 allows the communication between the portable device 101 and the transmitter-receiver 111 (Refer to Fig. 1). Then, the controller 113 certifying the portable device 101 locks or unlocks the lock gear 115. When the lock gear 115 is locked, operating the door handle 10 cannot unlock the door lock, thus preventing the door 70 from being opened or closed.

Operation procedures of the door opener-closer 1 having the above structure are to be described hereinafter.

When getting on the locked vehicle, at first, the operator carrying the portable device 101 (Refer to Fig. 1) presses down the lock switch 60 of the escutcheon 50. Then, the controller 113 operates the transmitter-receiver 111 to thereby transmit communication radio wave from the antenna 30, thus allowing the communication between the transmitter-receiver 111 and the portable device 101 of the operator. Then, certifying the portable device 101 through the above communication, the controller 113 unlocks the lock gear 115. Then, the operator operates the door handle 10 to unlock the door lock (not shown), thereby opening the door 70 to get on the vehicle.

For locking the vehicle after getting off the vehicle, the operator outside the vehicle presses down the lock switch 60 on the escutcheon 50.
Then, the controller 113 locks the lock gear 115.

In the above structure, the door handle 10 includes the handle body 11 having the backface side 11B formed with the cover receiver 13. The door handle 10 includes the cover handle 20 which is, by using the flexible resin, unitedly molded with the flexible antenna 30. With the cover handle 20 bent in combination with the antenna 30, the first engagement protrusion 22 and the second engagement protrusion 23 are engaged respectively with the first engagement 14 and the second engagement 15. The above engagements mates the cover handle 20 with the cover receiver 13, thereby holding the cover handle 20. Thereby, with the above simple structure, the antenna 30 can be disposed in the door handle 10, no need of increasing the number of components.

According to the first embodiment, the antenna 30 is unitedly molded with the cover body 21. Instead of the above united molding, the antenna 30 bent in combination with the cover body 21 may be adhered to the cover body 21, bringing about the like effect.

According to the first embodiment of the present invention, the door opener-closer 1 is applied to the outside door handle device for the vehicle. Otherwise, the door opener-closer 1 may be applied to a door of a gate of a house, bringing about the like effect.

The door opener-closer 1 is to be hereinafter explained in detail referring to the enclosed drawings, according to a second embodiment of the present invention. The door opener-closer 1 is applied to the outside door handle device for the vehicle, which device is included in the keyless entry system 100.

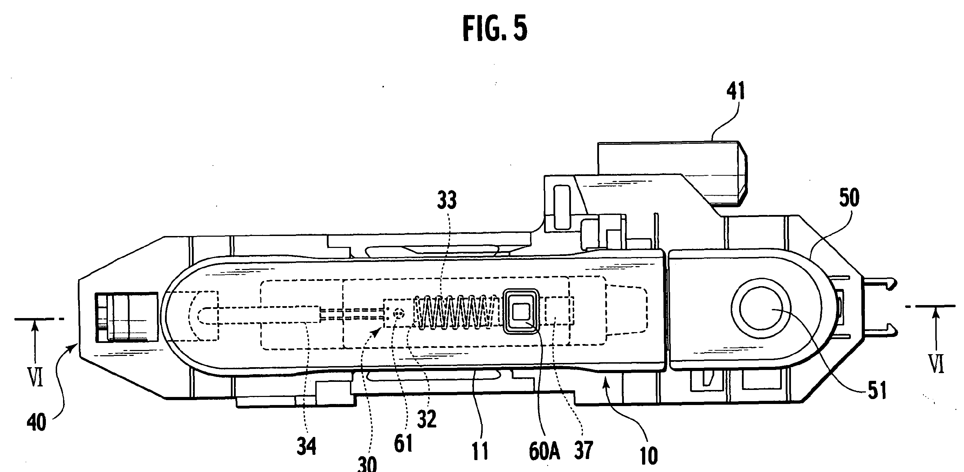

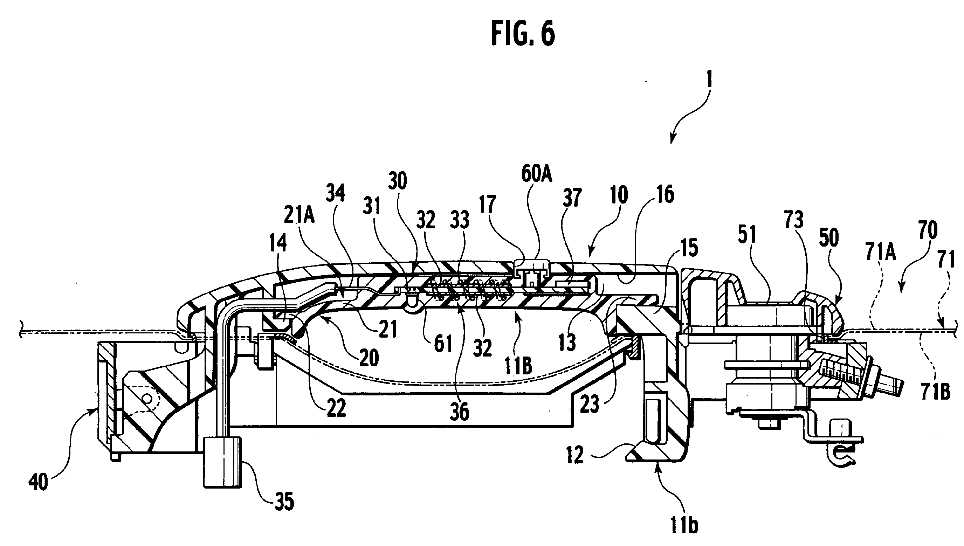

As shown in Fig. 5 and Fig. 6, the second embodiment is different from the first embodiment in that the lock switch 60 is not disposed at the escutcheon 50, but disposed at the antenna 30 in such a manner as to be operable from a surface side f the door handle 10. Other structural features according to the second embodiment are substantially the same as those according to the first embodiment.

The antenna 30 includes the core part 32 which is made of magnetic body cores layered on the surface and the backface of the flexible print wire board 31, where the magnetic body cores are made of soft magnetic body shaped into a plate. The antenna 30 includes the insulative cover lead 33 wound to the core part 32. The antenna 30 includes a static capacity sensor 37 which forms an oscillation circuit in combination with the cover lead 33. The outer connector cable 34 extends from the first end of the antenna 30. The antenna 30 includes the connector 35 disposed at the head end part of the cable 34. The connector 35 connects to the controller 113 (Refer to Fig. 1) on the vehicle's body side.

The flexible print wire board 31 extends further from an area where the insulative cover lead 33 is wound to the core part 32, in other words, extends further from both end parts of a coil formation 36. In a first part of the extending flexible print wire board 31, there is provided a lock switch 60A serving as a sensor. In a second part of the extending flexible print wire board 31, there is provided a light emission diode 61. The entirety of the antenna 30 sealed with flexible resin such as elastomer and the like is united, featuring flexibility.

The cover handle 20 according to the second embodiment includes the cover body 21 and the antenna 30, like the cover handle 20 according to the first embodiment. For molding the cover handle 20 by using the flexible resin, the antenna 30 is united with the surface side 21 A of the cover body 21. Inserting the first engagement protrusion 22 and the second engagement protrusion 23 in the cover receiver 13 by bending the cover handle 20 in combination with the antenna 30 can recover the cover handle 20 into the original form thereof. With this, the lock switch 60A is inserted into a switch hole 17 passing through from a base wall 16 of the cover receiver 13 toward a surface of the handle body 11, and is operably disposed on the surface of the handle body 11.

With this, the first engagement protrusion 22 is engaged with the first engagement 14, while the second engagement protrusion 23 is engaged with the second engagement 15. The above engagements can mate the cover handle 20 with the cover receiver 13 (disposed at the backface side 11B of the handle body 11) free of backlash, thereby holding the cover handle 20.

Then, operation procedures of the door opener-closer 1 having the above structure are to be described.

When getting on the locked vehicle, at first, the operator carrying the portable device 101 (Refer to Fig. 1) presses down the lock switch 60A of the door handle 10. Then, the controller 113 operates the transmitter-receiver 111 to thereby transmit the communication radio wave from the antenna 30, thus allowing the communication between the transmitter-receiver 111 and the portable device 101 of the operator. Then, certifying the portable device 101 through the above communication, the controller 113 unlocks the lock gear 115. Then, the operator operates the door handle 10 to unlock the door lock, thereby opening the door 70 to get on the vehicle.

For locking the vehicle after getting off the vehicle, the operator outside the vehicle presses down the lock switch 60A on the escutcheon 50. Then, the controller 113 locks the lock gear 115. Substantially simultaneously, the light emission diode 61 emits light, illuminating a lower part of legs of the operator.

In the above structure, the door handle 10 includes the handle body 11 having the backface side 11B formed with the cover receiver 13. The door handle 10 includes the cover handle 20 which is, by using the flexible resin, unitedly molded with the flexible antenna 30. With the cover handle 20 bent in combination with the antenna 30, the first engagement protrusion 22 and the second engagement protrusion 23 are engaged respectively with the first engagement 14 and the second engagement 15. The above engagements mates the cover handle 20 with the cover receiver 13, thereby holding the cover handle 20. Thereby, with the above simple structure, the antenna 30 can be disposed in the door handle 10, no need of increasing the number of components.

With the lock switch 60A assembled to the door handle 10, merely coupling the connector 35 to the lock switch 60A can complete the wiring. In the door 70, thereby, the wiring of the lock switch 60A or connecting the structure of the lock switch 60A is not necessary, improving assemblability.

According to the second embodiment, the antenna 30 is unitedly molded with the cover body 21. Instead of the above united molding, the antenna 30 bent in combination with the cover body 21 may be adhered to the cover body 21, bringing about the like effect.

According to the second embodiment of the present invention, the door opener-closer 1 is applied to the outside door handle device for the vehicle. Otherwise, the door opener-closer 1 may be applied to the door of the gate of the house, bringing about the like effect.

In addition, according to the second embodiment, the lock switch 60A is used as the sensor. Otherwise, the lock switch 60A can be replaced by the static capacity sensor 37. With the operator touching the static capacity sensor 37, the controller 113 operates the transmitter-receiver 111 to thereby transmit the communication radio wave from the antenna 30, thus allowing the communication between the transmitter-receiver 111 and the portable device 101 of the operator. This structure can also bring about the like effect.

### INDUSTRIAL APPLICABILITY

A door opener-closer under the present invention is applied to a door handle of a vehicle or of a house, and is advantageous in improving assemblability.

## Claims

1. A door opener-closer, comprising:
a door handle;
a flexible antenna including a magnetic body core made of a soft magnetic body, received in the door handle and serving as a transmitter-receiver communicating with a portable device;
a handle body having a backface side formed with a cover receiver;
a cover handle united with the antenna and made of a plastic resin, the cover handle mating with the cover receiver in such a manner as to be held by the cover receiver; and
a sensor for sensing at least one of the followings which are implemented by an operator carrying the portable device:
approaching a door,
contacting the door, and
operating the door,
to thereby allow the transmitter-receiver and the portable device to communicate with each other, thus locking or unlocking the door.

2. The door opener-closer as claimed in claim 1, wherein
the cover handle has a first end side and a second end side respectively provided with a first engagement protrusion and a second engagement protrusion,
the cover receiver has a first end side and a second end side respectively provided with a first engagement and a second engagement, and
the first engagement protrusion and the second engagement protrusion are respectively engageable with the first engagement and the second engagement.

3. The door opener-closer as claimed in claim 1, wherein
the sensor is united with the antenna.

4. The door opener-closer as claimed in claim 2, wherein
the sensor is united with the antenna.

5. The door opener-closer as claimed in claim 1, wherein
the door handle is applied to an outside door handle device for a vehicle.

6. A door handle, comprising:
a grip for operating a door;
a plastic antenna communicating with a portable device for operating a lock gear of the door; and
an engagement gear for engaging the grip with the plastic antenna.

7. The door handle as claimed in claim 6, wherein
the antenna includes:
a flexible base for covering the grip, and
a plastic magnetic body united with the flexible base.

8. The door handle as claimed in claim 7, wherein
the antenna includes a protrusion extending from the flexible base, and
the grip includes a nail extending toward the door and engaged with the protrusion.

9. A keyless entry system, comprising:
a door handle for operating a door;
a lock gear for locking the door; and
a controller for operating the lock gear, the controller including:
a portable device,
a plastic antenna communicating with the portable device, and
an engagement gear for engaging the antenna with the door handle.
